(19) Europäisches Patentamt
European Patent Office
Office européen des brevets

(11) **EP 4 478 680 A1**

(12) **EUROPEAN PATENT APPLICATION**

(43) Date of publication:
**18.12.2024 Bulletin 2024/51**

(21) Application number: **23382602.3**

(22) Date of filing: **16.06.2023**

(51) International Patent Classification (IPC):
**H04L 41/5019** *(2022.01)*   **H04L 67/131** *(2022.01)*
**H04W 24/02** *(2009.01)*   **H04L 41/5067** *(2022.01)*
**H04L 41/5009** *(2022.01)*   **H04L 41/50** *(2022.01)*
**H04L 41/16** *(2022.01)*

(52) Cooperative Patent Classification (CPC):
**H04L 41/5019; H04L 41/5067; H04L 67/131;
H04W 24/08; H04W 24/10;** H04L 41/16;
H04L 41/5009; H04L 41/5032; H04W 24/02

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **Nokia Technologies Oy**
**02610 Espoo (FI)**

(72) Inventors:
• **Pérez García, Pablo**
 **Guadalajara (ES)**
• **González Morín, Diego**
 **Madrid (ES)**
• **Pereira Rodrigues, Joao Antonio**
 **Lisbon (PT)**

(74) Representative: **Balder IP Law, S.L.**
 **Paseo de la Castellana 93**
 **5ª planta**
 **28046 Madrid (ES)**

(54) **APPARATUS, METHODS AND COMPUTER PROGRAMS RELATING TO QUALITY OF EXPERIENCE**

(57) A method comprises: determining on a user device, a quality of experience for an application running on the user device; and causing the determined quality of experience to be sent to a network entity.

EP 4 478 680 A1

Fig. 5

**Description**

<u>Field</u>

This disclosure generally relates to communication systems and in particular but not exclusively to apparatus, methods and computer programs relating to quality of experience.

<u>Background</u>

A communication system can be seen as a facility that enables communications between two or more communication devices, or provides communication devices access to a data network.

A communication system may be a wireless communication system. Examples of wireless communication systems comprise mobile systems operating based on radio access technology standards such as those provided by 3GPP (Third Generation Partnership Project) or ETSI (European Telecommunications Standards Institute), satellite communication systems, and Wi-Fi communication systems. A wireless communication system operating based on a radio access technology has a coverage area that can typically be divided into cells and are therefore often referred to as cellular systems.

A radio access technology standard sets out what the various entities of the communication system are permitted to do and how that should be achieved. For example, communication protocols and/or parameters to be used by communication devices for accessing or connecting to a radio access network of a mobile system are defined .

Examples of a standard are the so-called 5G (5th Generation) standards provided by 3GPP.

<u>Summary</u>

According to one aspect, there is provided a method comprising: determining on a user device, a quality of experience for an application running on the user device; and causing the determined quality of experience to be sent to a network entity.

Determining the quality of experience may comprise using a quality of experience model stored on the user device, wherein the quality of experience model defines a relationship between the quality of experience and one or more of: one or more metrics; one or more measurements; or one or more performance indicators.

The method may comprise causing the determined quality of experience to be sent to the network entity with one or more values used to determine said quality of experience using said quality of experience model, the one or more values comprising one or more of: one or more metric values; one or more measurement values; or one or more performance indicator values.

The determined quality of experience may comprises a mean opinion score.

The quality of experience model may provide a transformation from a transmission rating to the mean opinion score.

The quality of experience model may comprise at least one deployment based parameter.

At least one deployment based parameter may comprise one or more parameters used to determine a transmission rating.

The quality of experience model stored in the user device may comprise at least one user specific based parameter.

At least one user specific based parameter may comprise one or more parameters used to provide a transformation from the transmission rating to a mean opinion score defining the quality of experience.

The method may comprise updating one or more of the at least one user specific based parameters in the quality of experience model stored in the user device based on one or more of the one or more values.

One or more performance indicators provide one or more of: an indication of a visual quality; a measure of a data rate; or an indicator of delay.

The indicator of delay may comprise a round trip time.

The indicator of data rate may comprise one or more of a bit rate and a pixel per second rate.

The method may comprise causing a request to be sent from the user device, said request being for the quality of experience model, and receiving said quality of experience model in response to said request.

The method may comprise causing first data from the application to be sent to a remote computing resource, and receiving second data from the remote computing resource.

One or more of performance indicators may be used to provide an indication of a delay between providing the first data to the remote computing resource and receiving the second data from the remote computing resource.

The first data may comprise frame data and the second data may comprise one or more segmentation masks, the method may further comprise processing, by the application, the frame data and the one or more segmentation masks to provide image data for displaying on a display.

One or more of the performance indicators may be used to provide an indication of a visual quality of one or more of a frame associated with the frame data and a mask associated with the one or more segmentation masks.

The application may comprise an extended reality application.

The method may be performed by an apparatus. The apparatus may be or provided in a user device. The user device may comprise a user equipment.

According to another aspect, there is provided a user device apparatus comprising at least one processor and at least one memory storing instructions that, when executed by the at least one processor, cause the user device apparatus at least to perform: determining a quality of experience for an application running on the user device apparatus; and causing the determined quality of experience to be sent to a network entity.

Determining the quality of experience may comprise using a quality of experience model stored on the user device apparatus, wherein the quality of experience model defines a relationship between the quality of experience and one or more of: one or more metrics; one or more measurements; or one or more performance indicators.

The apparatus may be caused to send the determined quality of experience to the network entity with one or more values used to determine said quality of experience using said quality of experience model, the one or more values comprising one or more of: one or more metric values; one or more measurement values; or one or more performance indicator values.

The determined quality of experience may comprise a mean opinion score.

The quality of experience model may provide a transformation from a transmission rating to the mean opinion score.

The quality of experience model may comprise at least one deployment based parameter.

At least one deployment based parameter may comprise one or more parameters used to determine a transmission rating.

The quality of experience model stored in the user device apparatus may comprise at least one user specific based parameter.

At least one user specific based parameter may comprise one or more parameters used to provide a transformation from the transmission rating to a mean opinion score defining the quality of experience.

The user device apparatus may be caused to update one or more of the at least one user specific based parameters in the quality of experience model stored in the user device apparatus based on one or more of the one or more values.

One or more performance indicators provide one or more of: an indication of a visual quality; a measure of a data rate; or an indicator of delay.

The indicator of delay may comprise a round trip time.

The indicator of data rate may comprise one or more of a bit rate and a pixel per second rate.

The user device apparatus may be caused to cause a request to be sent from the user device apparatus, said request being for the quality of experience model, and to receive said quality of experience model in response to said request.

The user device apparatus may be caused to cause first data from the application to be sent to a remote computing resource, and to receive second data from the remote computing resource.

One or more of performance indicators may be used to provide an indication of a delay between providing the first data to the remote computing resource and receiving the second data from the remote computing resource.

The first data may comprise frame data and the second data may comprise one or more segmentation masks, the user device apparatus may be caused to process, by the application, the frame data and the one or more segmentation masks to provide image data for displaying on a display.

One or more of the performance indicators may be used to provide an indication of a visual quality of one or more of a frame associated with the frame data and a mask associated with the one or more segmentation masks.

The application may comprise an extended reality application.

The user device apparatus may comprise a user equipment.

According to another aspect, there is provided a user device apparatus comprising: means for determining on the user device apparatus, a quality of experience for an application running on the user device; and means for causing the determined quality of experience to be sent to a network entity.

The means for determining the quality of experience may use a quality of experience model stored on the user device apparatus, wherein the quality of experience model defines a relationship between the quality of experience and one or more of: one or more metrics; one or more measurements; or one or more performance indicators.

The user device apparatus may comprise means for causing the determined quality of experience to be sent to the network entity with one or more values used to determine said quality of experience using said quality of experience model, the one or more values comprising one or more of: one or more metric values; one or more measurement values; or one or more performance indicator values.

The determined quality of experience may comprise a mean opinion score.

The quality of experience model may provide a transformation from a transmission rating to the mean opinion score.

The quality of experience model may comprise at least one deployment based parameter.

At least one deployment based parameter may comprise one or more parameters used to determine a transmission rating.

The quality of experience model stored in the user device may comprise at least one user specific based parameter.

At least one user specific based parameter may comprise one or more parameters used to provide a transformation from the transmission rating to a mean opinion score defining the quality of experience.

The user device apparatus may comprise means for updating one or more of the at least one user specific based parameters in the quality of experience model stored in the user device apparatus based on one or more of the one or more values.

One or more performance indicators provide one or more of: an indication of a visual quality; a measure of a data rate; or an indicator of delay.

The indicator of delay may comprise a round trip time.

The indicator of data rate may comprise one or more of a bit rate and a pixel per second rate.

The user device apparatus may comprise means for causing a request to be sent from the user device, said request being for the quality of experience model, and means for receiving said quality of experience model in response to said request.

The user device apparatus may comprise means for causing first data from the application to be sent to a remote computing resource, and means for receiving second data from the remote computing resource.

One or more of performance indicators may be used to provide an indication of a delay between providing the first data to the remote computing resource and receiving the second data from the remote computing resource.

The first data may comprise frame data and the second data may comprise one or more segmentation masks, the user device apparatus may further comprise means for processing, by the application, the frame data and the one or more segmentation masks to provide image data for displaying on a display.

One or more of the performance indicators may be used to provide an indication of a visual quality of one or more of a frame associated with the frame data and a mask associated with the one or more segmentation masks.

The application may comprise an extended reality application.

The user device apparatus may be a user equipment.

According to another aspect, there is provided a method comprising: receiving, at a network entity, a quality of experience for an application running on the user device, said quality of experience being determined on the user device; and updating, at the network entity, a quality of experience model stored at the network entity using the quality of experience.

The quality of experience model may define a relationship between the quality of experience and one or more of: one or more metrics; one or more measurements; or one or more performance indicators.

The method may comprise receiving the determined quality of experience with one or more values used to determine said quality of experience on the user device, the one or more values comprising one or more of: one or more metric values; one or more measurement values; or one or more performance indicator values.

The quality of experience model may comprise at least one deployment based parameter.

The method may comprise receiving a request from the user device, said request being for the quality of experience model, and causing the said quality of experience model to be sent to the user device in response to said request.

The application may comprise an extended reality application.

The method may be performed by an apparatus. The apparatus may be or provided in a server.

According to another aspect, there is provided a network entity apparatus comprising: means for receiving at the network entity apparatus, a quality of experience for an application running on the user device, said quality of experience being determined on the user device; and means for updating, at the network entity apparatus, a quality of experience model stored at the network entity apparatus using the quality of experience.

The quality of experience model may define a relationship between the quality of experience and one or more of: one or more metrics; one or more measurements; or one or more performance indicators.

The means for receiving may receive the determined quality of experience with one or more values used to determine said quality of experience on the user device, the one or more values comprising one or more of: one or more metric values; one or more measurement values; or one or more performance indicator values.

The quality of experience model may comprise at least one deployment based parameter.

The network entity apparatus may comprise means for receiving a request from the user device, said request being for the quality of experience model, and means for causing the said quality of experience model to be sent to the user device in response to said request.

The application may comprise an extended reality application.

The network entity apparatus may be or provided in a server.

According to another aspect, there is provided a network entity apparatus comprising at least one processor and at least one memory storing instructions that, when executed by the at least one processor, cause the network entity apparatus at least to perform: receiving at the network entity apparatus, a quality of experience for an application running on the user device, said quality of experience being determined on the user device; and updating, at the network entity apparatus, a quality of experience model stored at the network entity apparatus using the quality of experience.

The quality of experience model may define a relationship between the quality of experience and one or more of: one or more metrics; one or more measurements; or one or more performance indicators.

The receiving may comprise receiving the determined quality of experience with one or more values used to determine said quality of experience on the user device, the one or more values comprising one or more of: one or more metric values; one or more measurement values; or one or more performance indicator values.

The quality of experience model may comprise at least one deployment based parameter.

The network entity apparatus may be caused to receive a request from the user device, said request being for the quality of experience model, and to cause the said quality of experience model to be sent to the user device in response to said request.

The application may comprise an extended reality application.

The network entity apparatus may be or provided in a server.

According to a further aspect, there is provided a computer program comprising instructions, which when executed by an apparatus, cause the apparatus to perform any of the methods set out previously.

According to a further aspect, there is provided a computer program comprising instructions, which when executed cause any of the methods set out previously to be performed.

According to an aspect there is provided a computer program comprising computer executable code which when cause any of the methods set out previously to be performed.

According to an aspect, there is provided a computer readable medium comprising program instructions stored thereon for performing at least one of the above methods.

According to an aspect, there is provided a non-transitory computer readable medium comprising program instructions which when executed by an apparatus, cause the apparatus to perform any of the methods set out previously.

According to an aspect, there is provided a non-transitory computer readable medium comprising program instructions which when executed cause any of the methods set out previously to be performed.

According to an aspect, there is provided a non-volatile tangible memory medium comprising program instructions stored thereon for performing at least one of the above methods.

In the above, many different aspects have been described. It should be appreciated that further aspects may be provided by the combination of any two or more of the aspects described above.

Various other aspects are also described in the following detailed description and in the attached claims.

Brief description of Figures

Some examples will now be described in further detail, by way of illustration only, with reference to the accompanying drawings, in which:

Figure 1 schematically shows some parts of a communication system supporting an XR application;
Figure 2 shows a schematic representation of an apparatus;
Figure 3 shows a schematic representation of a user equipment;
Figure 4 shows a schematic overview of some entities of Figure 1 according to some embodiments;
Figure 5 shows a schematic view of an example architecture of some of the entities of Figure 1 according to some embodiments;
Figure 6 shows an example message exchange between entities of Figure 1 according to some embodiments;
Figure 7 shows schematically processing of reporting different key performance indicators;
Figure 8 shows a first method of some embodiments; and
Figure 9 shows a second method of some embodiments.

Detailed description

In the following certain embodiments are explained with reference to communication devices capable of communication via a wireless cellular system and mobile communication systems serving such communication devices.

A communication system operating based on a 5$^{th}$ generation radio access technology (generally referred to as a 5G system (5GS)) may comprise a (radio) access network ((R)AN), a 5G core network (5GC), one or more application functions (AF) and one or more data networks (DN). A user equipment (UE) may access or connect to the one or more DNs via the 5GS.

The 5G (R)AN may comprise one or more base stations or radio access network (RAN) nodes, such as a gNodeB (gNB). A base station or RAN node may comprise one or more distributed units connected to a central unit.

The 5GC may comprise various network functions, such as an access and mobility management function (AMF), a session management function (SMF), an authentication server function (AUSF), a user data management (UDM), a user plane function (UPF), a network data repository, a network exposure function (NEF), a service communication proxy (SCP), edge application server discovery function (EASDF), policy control function (PCF), network slice access control function (NSACF), network slice specific authentication and authorization function (NSSAAF), and/or network slicing selection function (NSSF).

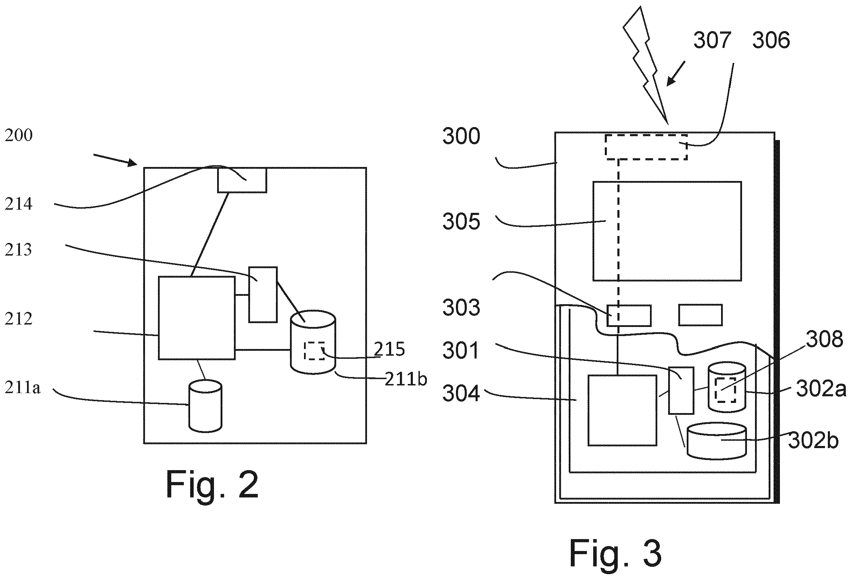

Figure 2 illustrates an example of an apparatus 200 for a communication system. The apparatus 200 may, for example, be for example provided in a core network of the communication system, such as a 5G core network. The apparatus 200 may, for example, comprise or implement one or more of the network functions of a control plane of the communication system. The apparatus 200 may have at least one processor and at least one memory storing instructions of one or more network functions that, when executed by at least one of the at least one processor cause operations or actions of one or more network functions to be performed. In this example, the apparatus may comprise at least one random access memory (RAM) 211a, and/or at least one read only memory (ROM) 211b. The apparatus may comprise at least one processor 212, 213 and/or an input/output interface 214. The at least one processor 212, 213 may be coupled to the at least one memory which in this example is the RAM 211a and the ROM 211b. The at least one processor 212, 213 may be configured to execute an appropriate software code 215. The software code 215 may, for example, allow the apparatus to perform one or more steps of one or more of the present aspects.

Figure 3 illustrates an example of a communication device 300. The communication device 300 may be any device capable of or configured for sending and receiving wireless signals, including radio signals. The communication device may be an XR (extended reality) device such as a headset or may be capable of supporting an XR application (e.g., capable of executing or running an XR application). The headset may be a VR headset. Some other examples of XR applications will be discussed later. Other non-limiting examples of a communication device 300 comprise a mobile station (MS) or mobile device such as a mobile phone or what is known as a 'smart phone', a computer provided with a wireless interface card or other wireless interface facility (e.g., USB dongle), a personal data assistant (PDA) or a tablet, a machine-type communications (MTC) device, a Cellular Internet of things (CIoT) device or any combinations of these or the like.

The communication device 300 may be a combination of an XR device and a communication device. For example, the communication device may be provided by a combination of a head mounted device (HMD) and a smart phone.

The communication device 300 may be configured to send or receive wireless signals, for example, radio signals carrying communications. The communications may be one or more of voice, electronic mail (email), text message, multimedia, data, machine data and so on.

The communication device 300 may be configured to send and/or receive radio signals over an air or radio interface 307 via a transceiver apparatus 306. The transceiver apparatus 306 may comprise, for example, a radio part and associated antenna arrangement. The radio part may convert the base band signal to the radio frequency and/or vice versa. The antenna arrangement may be arranged internally or externally to the mobile device and may include a single antenna or multiple antennas. The antenna arrangement may be an antenna array comprising a plurality of antenna elements.

The communication device 300 may comprise at least one processor 301, and/or at least one memory. The at least one memory may be at least one ROM 302a, and/or at least one RAM 302b. Other possible components 303 may be provided for use in software and hardware aided execution of tasks it is designed to perform, including control of access to and communications with access networks, such as the 5G RAN and other communication devices. The at least one processor 301 is coupled to the RAM 302b and the ROM 302a. The at least one processor 301 may be configured to execute instructions of software code 308. Execution of the instructions of the software code 308 may for example allow the communication device 300 to perform one or more operations. The software code 308 may be stored in the ROM 302a. It should be appreciated that in other embodiments, any other suitable memory may be alternatively or additionally used.

The at least one processor 301, the at least one ROM 302a, and/or the at least one RAM 302b can be provided on an appropriate circuit board, in an integrated circuit, and/or in chipsets. This feature is denoted by reference 304.

The communication device 300 may optionally have a user interface such as keypad 305, touch sensitive screen or pad, combinations thereof or the like. Optionally, the communication device may have one or more of a display, a speaker and a microphone.

In the following examples, the term UE or user equipment is used. This term encompasses any of the example of communication device 300 previously discussed and/or any other communication device. The term UE also encompasses the example where the communication device is an XR device on its own or an XR device in combination with a smart phone or the like.

The current radio access technology being standardized by 3GPP is generally referred to as 5G or NR. Other radio access technologies standardized by 3GPP include long term evolution (LTE) or LTE Advanced Pro of the Universal Mobile Telecommunications System (UMTS). Communication systems, such as a 5G system, generally include access networks, such as radio access networks operating based on a radio access technology that include base stations or radio access network nodes.

Communication systems, such as a 5G system, may alternatively or additionally include other types of access networks, such as a wireless local area network (WLAN) and/or a WiMAX (Worldwide Interoperability for Microwave Access) network that connect the UE to the data network to provide the UE access to a data network and/or the core network via a non-3GPP interworking function (N3IWF), a trusted non-3GPP gateway function (TNGF), or a wireline access gateway function (W-AGF).

It should be understood that example embodiments may also be used with standards for future radio access technologies such as 6G and beyond.

Communication systems may support services and applications having relatively high demands for bandwidth of the communication system. One example of such application is an XR application.

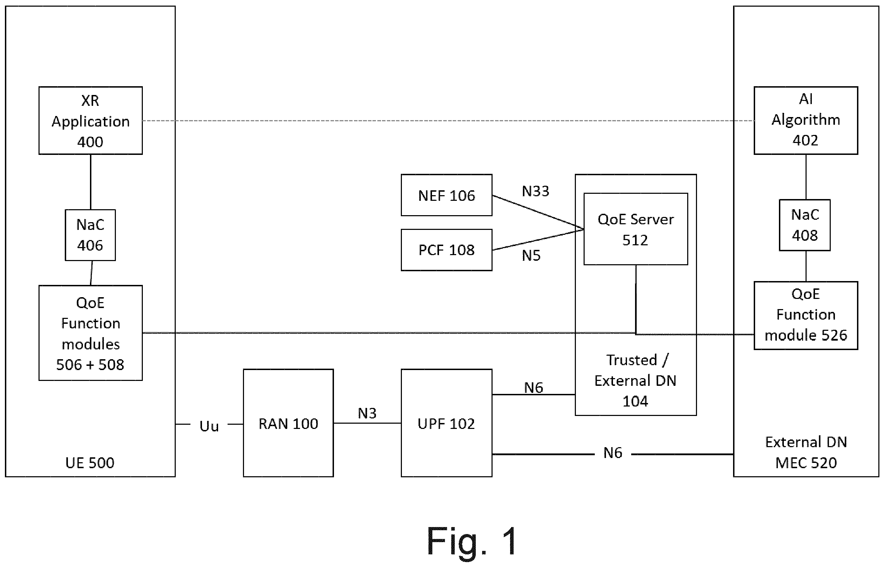

Reference is now made to Figure 1 which schematically shows some parts of a communication system which may support XR applications. The communication system shown in Figure 1 may be operating based on 5G radio access technology (e.g., may be a 5GS as described above). As shown in Figure 1, a UE 500 is provided with an XR application 400, a network-as-code (NaC) API 406, and QoE (quality of experience) modules 506 and 508. The UE may generally be as described in relation to Figure 3. The XR application 400, the NaC API 406 and the QoE modules 506 and 508 will be described in more detail later.

The communication system (e.g., 5GS) shown in Figure 1 includes a RAN 100 and a core network (e.g., a 5GC) comprising various network functions, including a UPF 102, a NEF 106, and a PCF 108. Other network functions of the core network (e.g., the 5GC) are not shown in Figure 1 for ease of illustration.

A QoE server 512 may be provided. The QoE server 512 may be provided in a trusted computing system (e.g., server) located in an external data network 104 or provided in a multi-access edge computing (MEC) system located at an edge of the communication system in the external data network 104. The trusted computing system may be a computing system for which the UE access the communication system (e.g., 5GS) via 3GPP access and security servers. The QoE server 512 will be described in more detail later.

In a MEC (multi-access edge computing) system 520, an AI algorithm 402, a NaC API 408 and a QoE module 526 are provided. The MEC system 520 may in some embodiments be provided in an external data network and connected to the UPF 102 of the core network via a N6 interface of the communication system.

The communication system (e.g., the SGS) shown in Figure 1 may support an XR application or XR service provided by the UE 500 to the XR user. Other embodiments of the communication may support applications or services other than XR applications or XR services (e.g., non XR services and non XR applications).

XR is an umbrella term and includes at least the following types of reality:

Augmented Reality (AR) where virtual objects are added to a real-world environment;
Virtual Reality (VR) where visual and audio scenes are combined with a real-world location; and
Mixed Reality (MR) where haptics and interactions are added to a real-world environment.

Some embodiments of the communication system (e.g., 5GS) described herein may additionally or alternatively support non XR applications or non XR services. For example, embodiments of the communication system may support non XR services where part of the non XR service is supported by a MEC system 520 and/or part of the non XR service is supported by one or more network functions of the core network (e.g., 5GC) of the communication system (e.g., SGS). A non XR service may be a service which requires a communication system to have relatively high resource requirements and/or stringent latency requirements to support the non XR service.

Referring again to Figure 1, a communication system (e.g., a SGS) may be used to provide an XR service of an XR service provider to the XR application 400 running on the UE 500. A user (e.g., a human) uses the XR service (e.g., an XR game) provided by the XR application 400 running on the UE 500. As described herein, the UE 500 may be an HMD or may include a headset, such as an HMD, and the user of the XR service (generally referred to herein as XR user) may wear the headset and use the headset (e.g., HMD) to use the XR service provided by the XR application. 400. The communication system used to provide the XR service to the XR application 400 running on the UE may be part of a mobile telecommunications network and is referred to as a serving network. The communication system (e.g., a core network) of the serving network may provide a quality of service flow for traffic of the XR application 400 transmitted to the communication system of the serving network. An XR user may experience a quality of experience. A quality of experience may be regarded as a degree of delight or annoyance related to the use of an XR. A quality of experience (QoE) related to the XR service is determined by a QoE model. The QoE may be a measure of the degree of delight or annoyance related to the use of the XR service experienced by an XR user. The QoE model may be a parametric model. The QoE model outputs a QoE given one or more key performance indicators (KPIs) as inputs to the QoE model.

Currently, for an XR application 400 running on a UE 500, most of the computing is performed at the headset. Some XR applications are based on 3D game paradigms, where the immersive content is rendered on a headset (e.g., a HMD (head-mounted display)) and the only communication requirements are given by the exchange of game data between players via a communication system, or with the XR service provided by the cloud (e.g., a cloud computing system) of the XR service provider.

This paradigm is changing with the evolution of more advanced XR services. Whilst the final rendering of the 3D space may still happen on the HMD, some XR services may require a higher use of network entities of the radio access network and/or core network of the communication system providing the XR service of the XR service provider for rendering. Some rendering examples are described in 3GPP TS 26.918 and 3GPP TS 26.928.

For example, offloading of part of the processing related to rendering (referred to as rendering-related processing) to an edge cloud (e.g., a cloud computing system located at the edge of the 5G communication system such as the MEC 520 of Figure 1) may be required. Offloading of part of rendering-related processing is generally referred to as "split rendering". Split rendering allows compute-intensive algorithms used when performing rendering-related processing to be executed on the edge cloud rather than in the HMD. The HMD may not have enough processing capability (e.g., it may not have sufficient processors or a powerful GPU (graphics processing unit) for executing compute-intensive algorithms which are used when performing rendering-related processing).

Split rendering may require remote transmission of a complex video scene by an XR application 400 to the MEC system 520 via the communication of the network. A complex video scene may include 360-degree capture of a scene, volumetric video-based avatars, and/or real-time capture and transmission of a digital twin. Combining of one or more of a 360-degree scene, volumetric video-based avatars, and/or a digital twin may be required.

In the example of split rendering, rendering-related processing may include performing semantic segmentation on an image (or images) of a local scene as captured by one or more cameras installed on the HMD at an edge cloud. For example, semantic segmentation may be performed by an AI algorithm (or AI model) in the MEC 520 in the example shown in Figure 1. In a mixed reality application, the local environment is augmented with virtual objects (augmented reality), or some elements of the local environment are introduced in the virtual experience (augmented virtuality). For example, a player may be able to see their own body while immersed in a VE.

To merge the local environment and the virtual environment (VE), a scene in the local environment is captured as an image (or as sequence of images (e.g., a video)) by the one or more cameras of the HMD. The image (or sequence of images) is/are analysed using an algorithm running on a computer (or an AI model deployed on a computer). The algorithm determines based on the analysis which pixels in the image (or sequence of images) are to be integrated in the VE. The decision as to which pixels are to be integrated in the VE may be done using an algorithm, such as a deep-learning algorithm (e.g., semantic segmentation) which receives the image (or sequence of images (e.g., video)) from the one or more cameras of the HMD and creates a transparency mask for scene that can be added in the VE. The XR application may be provided on the HMD and the algorithm may run on the MEC system 520 shown in the example of Figure 1.

For complex XR applications, such as those using split rendering, offloading an algorithm to an edge cloud (or deploying an AI model (e.g., a neural network model) on an edge cloud) is to provide sufficient processing capacity for execution of the algorithm (or the AI model). For example, an image (or a sequence of images (e.g., a video) may need to be analysed using a deep learning algorithm (e.g., semantic segmentation) in real time and captured by a camera with a sufficiently high frame rate. Thus, the image (or sequence of images) is provided by the HMD to the serving network. The UE 500 running an XR application 400 (e.g., and the network serving the HMD UE 500 (e.g., the HMD)) needs to support uplink traffic peaks in the order of, for example, gigabits per second, and have roundtrip times (RTTs) to a MEC system 520 of, for example, a few milliseconds in order to ensure that the image (or sequence of images) are analysed in real time.

An XR application, such as XR application 400, which uses split rendering relies on the infrastructure of a network comprising a communication system, such as a 5GS described above. Consequently, there are one or more constraints which the XR application (e.g., the XR application 400) needs to consider when using split rendering. The constraints may be bandwidth and/or latency of the network, and/or computing power (or, equivalently, energy consumption) of the edge cloud (e.g., the MEC system 520).

Some embodiments of the present disclosure may provide a mechanism for indicating the relationship between the constraints mentioned above and their impact on a quality of experience (QoE). The mechanism may be used to dimension, operate and/or monitor the network. Some embodiments may use a QoE model or function to determine a QoE.

QoE modelling may provide statistical models (generally referred to as QoE models) that allow a network comprising a communication system, such as the 5GS described above, to be controlled or even designed in order to support desired levels of QoE (e.g., the network may be controlled or design to ensure that the network has sufficient resources (e.g., bandwidth, latency, etc.) to provide sufficient QoE to an XR user). Different types of XR applications may require different QoE models. The QoE model may be provided by a QoE module.

Some embodiments may make available a QoE model to an XR application.

Some embodiments may allow an XR application to request that a desired QoE be supported by the network.

An XR application may be supported by specialized network services, for example network slices.

Some embodiments may be used with one or more of:

XR on the go;
XR and cloud gaming;
XR - Edge Cloud - Mobility;
Enabling future Metaverse and XR applications with mobility; and/or
Edge Cloud and network slicing.

Split rendering as discussed above may require coordination between the XR application 400 and the network that communicates with the MEC system. The network includes the communication system via which the UE 500 (which may be or include the HMD) that hosts the XR application 400 communicates (e.g., send image(s) for rendering-related processing) with the MEC system 520. This may be so that it is possible for the XR application 400 to provide the XR service to the XR user with enough QoE in different network conditions.

Some embodiments allow the XR application 400 to communicate with the network. The XR application 400 may communicate with the communication system serving network via an API (application programmable interface) in some embodiments. The XR application 400 may report the QoE that is experienced by an XR user when the XR application 400 is running. The XR application 400 may report the QoE via the API.

The XR application 400 may request some KQIs to fulfil the level of QoE needed by the XR application 400. The XR application 400 may request the KQIs via the API.

In some embodiments, the communication system may be configured to understand the QoE which is being experienced by XR users. This may be for monitoring purposes and/or to dimension the communication system and/or balance the resources (e.g., bandwidth, latency) of the network comprising the communication system for UEs of different XR users.

As discussed, in some embodiments, a QoE model or function may be used to determine a QoE which is being experienced by an XR user. The QoE model or function may be adapted to different workloads and/or use cases. The QoE model or function may capture QoS-to-QoE relationships required by the XR application.

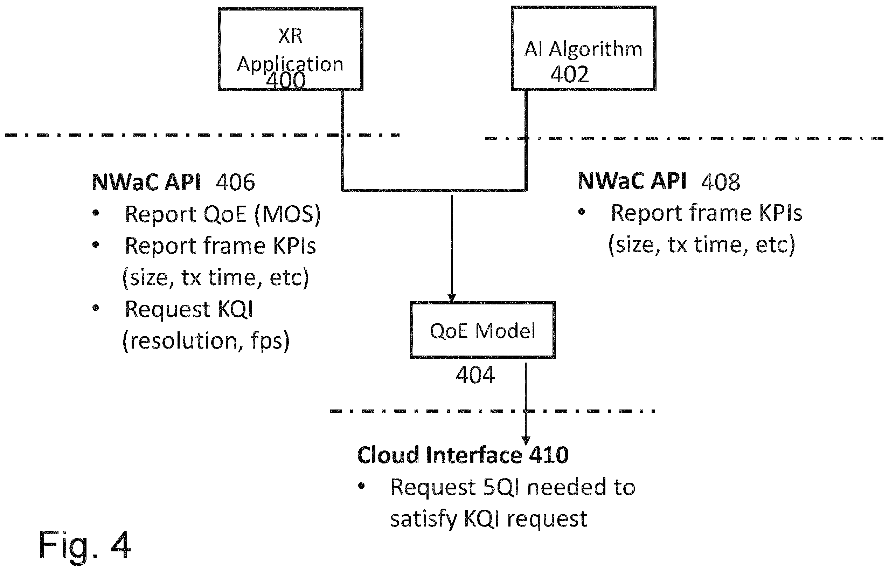

Reference is made to Figure 4 which shows schematically shows an overview of XR application 400, an AI algorithm 402 and a QoE model 404.

In this example, semantic segmentation is carried out with respect to frames (e.g., images) received from the XR application 400. Semantic segmentation is the process of assigning a class label to each pixel in a frame (e.g., an image) and may be performed using the AI algorithm 402 which may be a deep learning algorithm. Examples of such deep learning algorithms are known and thus not described in detail.

In some embodiments, an API is provided to enable the XR application 400 and the AI algorithm 402 to facilitate communicate with each other. This API may be a network-as-code (NaC) API. NaC API facilitates the network programmability, by making available one or more APIs that can be used either by a XR application 400, or other applications that may require network programmability in the core network (e.g., 5GC)

Some embodiments may provide a NaC API 406 in the UE comprising the XR application 400 and a NaC API 408 in the MEC system 520 comprising the AI algorithm 402.

The NaC API may allow the QoE which is being experienced in the XR application to be reported to the QoE module.

The NaC API may allow QoS KPIs (quality of service key performance indicators) to be reported. These QoS KPIs may be KPIs relating to the network or KPIs relating to a data stream. These QoS KPIs may be frame size, round trip times (RTT), and/or the like. The QoS KPIs may be reported by the NaC API 406 and/or by the NaC API 408.

The API may request a target for one or more parameters. For example, the API may request one or more target key quality indicator (KQI) from the communication system of the network. The API may request a target KQI in terms that the XR application 400 understands. The target KQI may be a target resolution for a frame (e.g., image) and/or a frame rate. The target KQI may be requested by the NaC API 406. With the information provided, the QoE server 512 may be able to do one or more of the following:

monitor the level of QoE offered to the XR service provided to an XR user by the XR application 400; and/or
reserve one or more appropriate QoS parameters (e.g., SQI (5G QoS Identifier)) to fulfil the requests made by XR application 400 (XR application requests) to call functions of the API.

A QoE model or function 404 is provided. The QoE model or function 404 will be discussed in more detail later. The QoE model or function 404 is available at the UE 500 and deployed on a computer or computing system, such as a server (referred to herein as a QoE server). The QoE model or function 404 available at the UE 500 can allow the XR application 400 to request the appropriate KQI for a target QoE value. The QoE model deployed at the QoE server 512 is able to request based on the requested target for one or more parameters, the associated network resources in order to support the target QoE. This may be to provide resources which can support at least a given bit rate, for example. The bit rate may be a guaranteed bit rate. For example, the QoE server 512 is able to request based on the requested KQI the associated SQI.

In some embodiments, the QoE model may be a parametric model. In other embodiments, the QoE model may be an AI/ML model. In other embodiments, the model may be a neural network model.

A cloud application programming interface or API 410 is provided via which the appropriate QoS parameters can be requested.

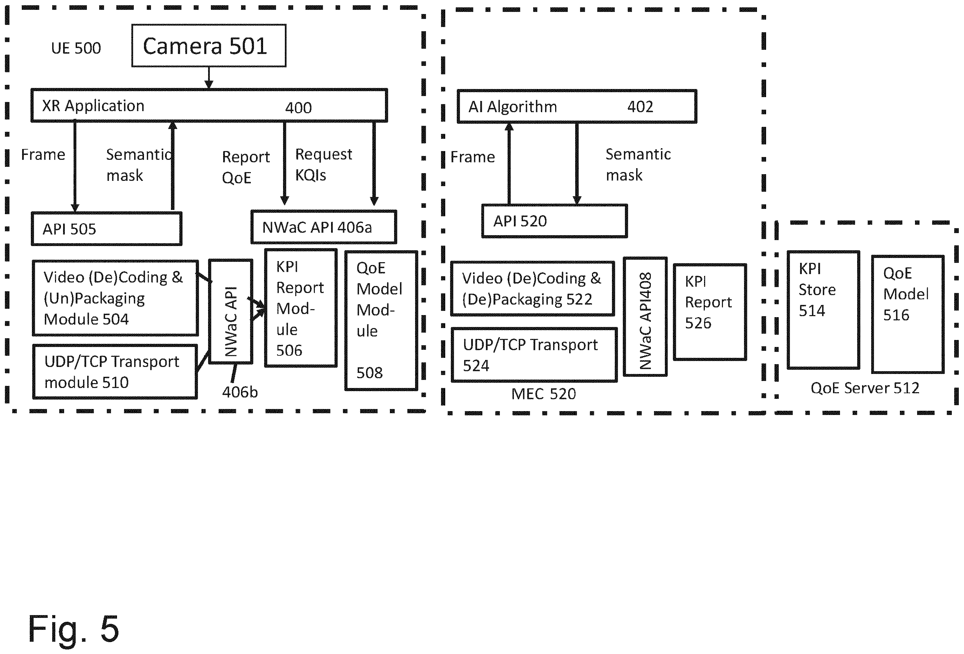

Reference is now made to Figure 5 which shows an example of the hardware and software of the UE 500 providing the XR application 400, the MEC 520 on which the AI algorithm 402 runs, and the QoE server supporting the QoE model or function.

In this example, there is a distributed rendering XR system. The XR application 400 is running on the UE 500. The UE 500 may for example be an HMD on its own or an HMD operating in conjunction with another communications device.

The AI algorithm 402 is running on a MEC system 520 located at an edge of a network. For example, the AI algorithm 402 may be provided by mobile edge computing (MEC) system 502, such as shown in Figure 1.

The UE 500 includes a first module 504. The first module 504 may code and package video and/or decode and unpack video. This allows frames captured by the camera 501 of the UE and generated segmentation masks to be exchanged between the XR application 400 and the AI algorithm 402 through the network comprising the communication system (e.g., 5GS) described above. The XR application 400 may pass frames captured by a camera 501 to the first module 504 via a second API 505. The first module 504 may pass received semantic masks, received from the AI algorithm 402 via the second API 505, to the XR application.

The UE 500 includes a second module 510 which is a UDP/TCP (user datagram/transmission control protocol) transport module. The second module 510 processes data received from the first module 504 into a form for transport across the network. The data is transported across the network to the AI algorithm 502. The second module 510 processes data received from the AI algorithm 502 via the network and passes the received data to the first module 504. The received data is the semantic mask data.

In this example, the NaC API included in the UE 500 has a first NaC API 406a and a second NaC API 406b. The first NaC API 406a and the second NaC API 406b may be regarded as parts of the NaC API.

The first NaC API 406a may provide one or more of following functions:

a. The first NaC API 406a may report the QoE. The QoE may be reported as a score. The score may be reported on a scale of a to n. a and n may be integers. By way of example only, the scale may be 1 to 5. The score may be a MOS (mean opinion score) score. The score may correspond to a given time. For example, the score may correspond to the last x seconds where x is a numeric value. For example, the first NaC API 406a may report the QoE by calling a reportQoE (score, time) function.

b. The first NaC API 406a may request enough QoS to support the process carried out by the XR application. For example, the process may be a process for split rendering (i.e., a split rendering process). The request may be for enough QoS to support the process at a given resolution of a frame (e.g., an image) and/or frame rate (e.g., a number of frames captured by the camera of the HMD in a period of time). The request may be by a KQI request. The KQI request may be provided using KQIs (resolution, fps (frames per second)) function. The request (e.g., the KQI request) may be to satisfy a target QoE required by the XR application 400.

The second NaC API 406b may provide one or more of following functions:

a. The second NaC API 406b may report the sending of an individual frame (e.g., image) to the AI algorithm 402 running on the MEC system 520. This is a frame (e.g., image) captured by the camera 501 of the UE 500. The report may comprise one or more of a timestamp indicating a time the frame (e.g., image was captured by the camera 510 of the UE 500), a resolution of the frame (e.g., image) in pixels, a size of the frame (e.g., image) in bytes, and the coding delay overhead added by coding and packaging the frame (i.e., the image). The report may be sent responsive to calling a reportFrame(resolution, bytes, delay, timestamp) function.

b. The second NaC API 406b may report the reception of an individual segmentation mask. The report may comprise one or more of a timestamp indicating a time the segmentation mask was received, a resolution of the segmentation mask in pixels, a size of the segmentation mask in bytes, a coding delay overhead added by the decoding and unpackaging process for the segmentation mask, and the total (application-level) RTT (i.e. the time difference compared to when the associated frame (i.e. image) from which the segmentation mask was generated was reported). The report may be sent by calling a reportMask (resolution, bytes, delay, RTT, timestamp) function.

The UE 500 comprises a KPI report module 506 and a QoE model or function module 508. The KPI report module 506 and the QoE model module 508 interact with XR application 400 via the NaC API 406.

The KPI report module 506 gathers information relating to the XR application 400 which is to be sent to the QoE server 512. The information relating to the XR application 400 may be provided to the KPI report module 506 via the first NaC API 406a.

The XR application 400 reports the QoE being experienced in the XR application to the KPI report module 506 via the NaC API 406a.

The QoE model or function 516 provided the QoE module 508 is used by the XR application 400 to determine the QoE.

The XR application 400 sends requested KQIs to KPI report module 506 via the first NaC API 406a. The requested KQIs are determined using the QoE model or function.

The QoE module 508 provides a QoE model. The model may be locally updated with the information of KPIs received from KPI report module. The updating of the QoE model may be performed in the QoE module 508 and/or by the XR application 400.

The AI algorithm 402 is provided by an MEC system 520. The UE 500 communicates with an access point or access node, such as a gNB or other base station of an access network of a communication system. The access point communicates with the 5GC and the 5GC communicates with the MEC system 520. The 5GC establishes a data session between the UE 500 and a UPF of the 5GC for the UE 500 to send data to and to receive data from the MEC system 520.

The MEC system 520 includes a third module 522. The third module 522 may code and package semantic masks and/or decode and unpack video (e.g., frames) received from the XR application 400 of the UE 500. This allows video (e.g., frames) captured by the camera 501 of the UE 500 and the semantic masks generated by the AI algorithm 402 running on the MEC system 520 to be exchanged through a communication system of a network. The frame or frames of the video are captured by the camera and are provided to the AI algorithm via the XR application 400, the API 505, the second module 510, the network between the UE 500 and the MEC 520, the fourth module 524, the third module 522, and the API 520.

The AI algorithm 402 receives frames (e.g., images) captured by the camera 501 of the UE 500 sent by the XR application 400 from a third API 520. The AI algorithm 402 provides semantic masks, determined by processing the received video (e.g., frames), to the third module 522 via the third API 520. The semantic masks are provided to the XR application by the AI algorithm via the API 520, the third module 522, the fourth module, the network between the MEC 520 and the UE 500, the second module 510 and the API 505.

The MEC system 520 includes a fourth module 524 which is a UDP/TCP (user datagram/transmission control protocol) transport module. This fourth module 524 processes data received from the third module 522 into a form suitable for transport across the communication network. The processed data (e.g., a semantic mask) is transported across the communication network to the XR application 400. The fourth module 524 processes the data (e.g., a semantic mask) received from the communication network and passes the received data to the third module 522. The received data is data of the frame (generally referred to as frame data).

The MEC system 520 includes the NaC API 408. The NaC API 408 of the MEC system 520 reports the time taken to end-to-end process a single frame (e.g., a single image) and return a segmentation mask for the single frame (e.g., single image). The time taken to end-to-end process a single frame (e.g., single image) may include coding and decoding delays. The report may be provided by calling a reportProcess(delay, timestamp) function.

The MEC system 520 comprises a KPI report module 526. The KPI report module gathers information or KPIs such as previously discussed from the AI algorithm and sends it to the QoE server.

In some embodiments, a QoE server 512 is provided. The QoE server 512 may be provided by an application server or by a dedicated QoE server. In some embodiments, an application server may have access to a QoE model or function which may be part of that application server or separate from that application server. In the following, that server will be referred to as a QoE server.

The MEC system 520 communicates with the QoE server 512 via a network in some embodiments.

The QoE server 512 is provided with a KPI store module 514 and a QoE model module 516. The QoE model module 516 contains the QoE model or function. The QoE model or function is updated with the information of KPIs received from the KPI report modules 506 and 526. The KPIs received from the KPI report module 506 of the UE 500 and the KPI report module 526 of the MEC system 520 may be stored in the KPI store module 514 of the QoE server 512. Using this QoE model or function, the system is able to process the KQI request from the XR application and translate it into a QoS request to the 5G core (or transport network in general).

The QoE modules 508 and 516 store the QoE model or function associated with the XR application.

In this example, the UE 500 may communicate with the MEC system 520 via a network comprising a 5G/5G-advanced communication system. However, in other embodiments, the UE 500 may communicate with the MEC system 520 via any other suitable communication system which supports QoS policies.

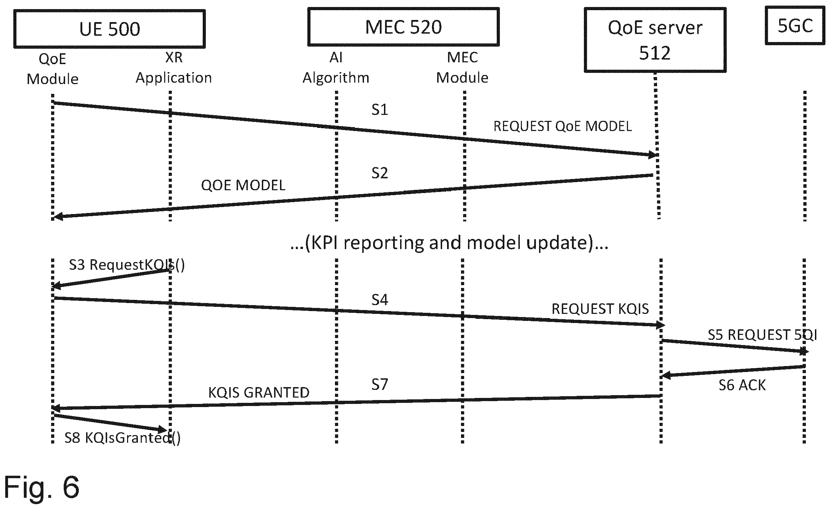

Reference is made to Figure 6 which shows an example message exchange of some embodiments.

At initialization time, the QoE module 508 of the UE 500 retrieves a general QoE model for the XR service.

At S1, the QoE module of the UE 500 sends a request for a QoE model or function to the QoE server 512. The request for a QoE model or function may be sent by the UE 500 calling a REQUEST_QOE_MODEL function as shown in Figure 6.

At S2, the QoE server provides the requested QoE model or function to the UE 500. The QoE model or function is stored in the QoE module at the QoE server.

The service provided by the XR application starts to run and KPIs are reported and stored in the QoE server 512.

At some point, the XR application 400 will require a certain level of QoE and may request the certain level of QoE by calling a REQUEST_KQIs function. The XR application 400 will set a target level of quality (Q) and will use its QoE model or function to determine, for example, the value required values of bit rate for the frame, the mask, and/or the total end-to-end delay.

At S3, the XR application 400 provides a request for one or more KQIs to the QoE module 508 of the UE 500.

At S4, the QoE module 508 of the UE 500 sends the request for one or more KQIs to the QoE server 512. The request for one or more KQIs may be sent via a cloud API to the QoE server 512. The cloud API may be an HTTP (hypertext transfer protocol)/REST (representational state transfer) API. It is the communication between the QoE module in the UE and the QoE Server. From the total end-to-end delay, the QoE module in the QoE server 512 may subtract the average processing times in the QoS server and UE 500, to obtain the target delay for the network (generally referred to as network delay). The QoE module of the QoE server 512 requests from the core network (e.g., 5GC) of the communication system the required levels of throughput and delay using the QoE model or function at the QoE server 512.

From the total end-to-end delay, the QoE module 516 subtracts the average processing times in the MEC system 520 (e.g., the average time the AI algorithm 402 running on the MEC system 520 takes for processing) and UE 500, to obtain the target network delay. Finally, the QoE module requests from the network the required levels of throughput and delay (REQUEST _5QI).

At S5, the QoE server 512 sends a request for determined 5QI to the 5GC.

At S6, the 5GC sends an acknowledgement to the QoE server. This indicates that the requested one or more KQIs have been granted.

At S7, the QoE server 512 sends an indication that the one or more KQIs have been granted to the QoE module 508 of the UE 500.

At S8, the QoE module 512 of the UE 500 sends the indication that the one or more KQIs have been granted to the XR application 400.

During the above-described process, both the general QoE model stored in the QoS server 512 and the local version of the QoE model kept by the UE 500 may be updated.

It should be appreciated that any other suitable module or part of the UE 500 may be for formulating and/or sending the request for the QoE model.

The request for the KQI will be based on the stored QoE model. It should be appreciated that any other suitable module or part of the UE 500 may be for the sending of the request for the KQI to a core network (e.g., 5GC) of the communication system.

It should be appreciated that any other suitable module or part of the UE 500 may be for receiving the requested KQI for the network and/or providing the information to the XR application.

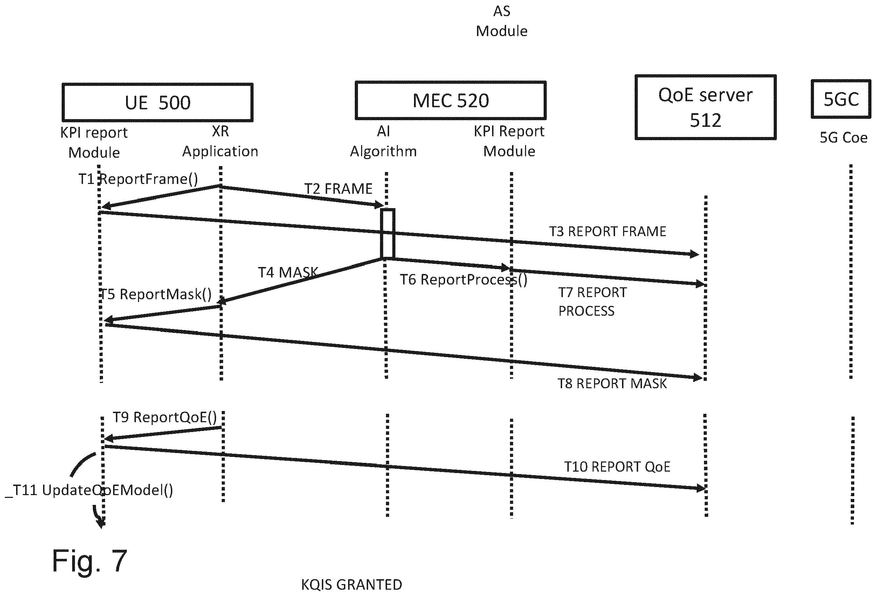

The processing of reporting different KPI events is described with reference to Figure 7.

At T1 a frame (e.g., image) is sent by the XR application 400 running on the UE 500 to the AI algorithm 402 running on the MEC system 520.

As shown at T2, whenever a frame (e.g., image) is sent by the XR application 400, the frame (e.g., image) is sent to the KPI report module 506 by the UE 500 calling a ReportFrame() function.

At T3, the KPI report module 502 reports the KPI for the frame (e.g., the image) to the QoE server 512. This KPI may be stored in the KPI store of the QoE server 512.

At T4, the AI algorithm 402 generates a semantic mask for the frame (e.g., image) and sends the semantic mask to the XR application 400.

At T5, when the semantic mask is received by the XR application 400, the XR application 400 reports the semantic mask to the KPI report module 506 in a report mask message. In some embodiments, the semantic mask may be reported by the XR application 400 calling a ReportMask() function as shown in Figure 6.

At T6, the AI algorithm 402 sends a report of its processing time (e.g., a time taken for processing a frame (or frames) received from the XR application 400) to the KPI report module of the MEC system 520. The AI algorithm 402 may report the processing time by calling a ReportProcess(delay, timestamp) function as shown in Figure 6.

At T7, the KPI report module 526 of the MEC system 520 reports the processing time reported by the AI algorithm 402 to the QoE server 512. The processing time which is reported may be stored in the KPI store 514 of the QoE server 512.

It will be appreciated that T4 and T5 may take place generally in parallel with T6 and T7.

As a result of the reporting functions described above, the network KPIs related to processing of the frame (e.g., image), including compression of the frame (e.g., image), transmission of the frame to and from the UE 500 to the MEC system 520 via the communication system of the network and the semantic segmentation of the frame (e.g., image) performed by the AI algorithm 402 may be stored. The network KPIs may be one or more of bandwidth, PPS (packets per second), and/or end-to-end delay (e.g., the sum of all delays involved in processing of the frame (e.g., image)).

The network KPIs may be stored in the KPI store 514 of the QoE server 512.

At T9, when the XR application 400 reports a QoE value in a report QoE message, such as ReportQoE() shown in Figure 6, to the KPI report module 506, the KPIs from the time period covered by the ReportQoE() message are used to update the values of the local QoE model stored in the UE 500, as referenced at T11.

At T10, the KPI report module 506 reports the QoE generated by the local QoE model to the QoE server 512. The QoE model in the QoE server 512 is also updated.

In this example, a KPI report module 506 is shown as interacting with the XR application 400. In some embodiments, the KPI report module 506 may store the KPIs and one or more of the reporting functions may be carried out by any other suitable module or part of the UE 500.

In this way, it is possible to use a combination of XR user-related KPIs (that is KPIs for each XR user) and platform-wide or deployment-wide (that is KPIs common for all XR users of the communication system) KPIs. It is also possible for the QoE model to have a combination of XR user-related parameters and platform-wide parameters. This provides flexibility.

Any suitable QoE model may be used.

In some embodiments, one or more perceptual parameters of the QoE model are updated and handled in a per deployment basis.

A parameter of the QoE model may be per-deployment or per-user. Per-deployment means that all the users in the same deployment share the same values for those parameters. A per-deployment parameter is updated in the model in the QoE server entity). A per-deployment parameter is not updated by the UE. The UE may receive the updated per-deployment from the QoE server entity. Per-user means that the parameters are updated, by the UE, in the QoE model running on the UE. Each user may have their own values of these parameters.

One example of a QoE model will now be described.

The QoE model is a first-order parametric model governed by the following equation:

$$Q = M(R) = M\big(1 - I_{V,f} - I_{V,m} - I_D\big)$$

Where:
Q is the QoE rating in a defined scale. The defined scale may be from 1 to 5. The defined scale may provide an ACR (Absolute Category Rating).

M is a function.

R is the Transmission Rating scale in scale 0-1, where 0 is minimum quality and 1 is maximum quality.

This model implies that the communication system (e.g., the 5GS) is configured to have high quality, which will be impaired by the following factors:

visual quality of the frame ($I_{V,f}$)
visual quality of the mask ($I_{V,m}$)
end-to-end delay ($I_D$).

Visual quality may be modelled using an exponential rate-distortion relationship

$$I_V = e^{-\alpha \frac{B}{PPS}}$$

Where

B is the bit rate
PPS are the pixels-per-second, i.e., the product of the resolution and the frame rate,
$\alpha$ is a parameter of the model ($\alpha_f$ for the frame and $\alpha_m$ for the mask, with different values).

Over a period of time, the bit rate B is computed as the number of bits transmitted in the period (obtained from the field "bytes" in the report Frame/report Mask calls) divided by the time period, while the frame rate is obtained by the number of calls of the reportFrame and/or reportMask functions divided by the time period.

The effect of delay is modelled using a logistic curve:

$$I_D = \frac{1 + e^{-\beta}}{1 + e^{-\beta\frac{T-\theta}{\theta}}}$$

Where:

T is the end-to-end delay and $\beta$ and $\theta$ are parameters. The end-to-end delay is the RTT value from the call of the reportMask function. $\beta$ and $\theta$ are parameters that may be learned during training of the model.

Therefore Q may be rewritten as:

$$Q = M(R) = M\left(1 - I_{V,f} - I_{V,m} - I_D\right) = M\left(1 - e^{-\alpha_f \frac{B}{PPS}} - e^{-\alpha_m \frac{B}{PPS}} - \frac{1 + e^{-\beta}}{1 + e^{-\beta\frac{T-\theta}{\theta}}}\right)$$

$\alpha$ is a parameter that may be learned during training of the model.

The function M is the R-to-MOS transformation, and it has the following format:

$$M(R) = Q_{min} + R(Q_{max} - Q_{min}) + aR(R - b)(1 - R)$$

Where Qmax, Qmin, a and b are parameters. The values of these parameters (e.g., the values of Qmax, Qmin, a and b are learned during training of the model. These values may be updated during use. Qmax and Qmin are the maximum and minimum expected values of M (i.e. the edges of the MOS scale, typically around 1 and 5). a and b are parameters which modify the shape of the curve (that is how it deviates from a linear function).

R to MOS transformation may be based on a function proposed in ITU-T E-model and may be backwards-compatible with it (if Qmin = 1, Qmax= 4.5, a = 7 and b = 0.6).

When the application reports a QoE value using ReportQoE(), the KPIs from the period covered by the ReportQoE()are used to update the values of the parametric model (that is the QoE model), both in the central server and in the local (per-UE) model. This way, it is possible to use a combination of user-related and platform-wide parameters for a maximum flexibility.

In some embodiments, the perceptual parameters ($\alpha$, $\beta$ and $\theta$) are updated and handled in a per-deployment basis.

In some embodiments, parameters of R-to-MOS function (Qmax, Qmin, a, b) are handled in a per-user basis.

When a RequestKQI() is called from the application, it uses the QoE model to compute the requested bit rate (B) and end-to-end delay (RTT) from application perspective. Then it is mapped to network-level throughput ($B_N$) and delay ($RTT_N$), so that:

-

$$B_N = B$$

-

$$RTT_N = RTT - delay_{Frame} - delay_{Mask} - delay_{Process}$$

Where $delay_{Frame}$, $delay_{Mask}$ and $delay_{Process}$ are the average of the "delay" values obtained from reportFrame, reportMask and reportProcess calls.

An initial value of the model parameters should be provided to the QoE server before the system is able to process Request KQI() messages.

In some embodiments, the application can be regarded as having knowledge about the user QoE, both in terms of what the user is experiencing at a given time and what the user needs.

The application may report the QoE level directly and not in terms of the required KPI.

The application may can request KQIs in application terms, and these are automatically translated to KPIs related to the network comprising the communication system (e.g., 5GS) (generally referred to herein as network KPIs).

In some embodiments, perceptual properties are used to create a QoS-to-QoE model. The QoS-to-QoE model may be suitable for any split rendering use case where image quality and end-to-end delay are relevant parameters.

A R-to-MOS function may be used to transfer those perceptual functions to user opinion scores.

In some embodiments, relatively few parameters are used so the QoE model can capture the most relevant QoS-to-QoE relationships without overfitting. The QoE model may be trained with a relatively small number of samples. The QoE model may be trained using a nonlinear least square minimization technique. As such, per-user (or per-groups-of-users) QoE models may be provided.

Some embodiments may provide a relatively simple QoE model.

$I_v$ and $I_p$ have been simplified to select specific parameters.

The R-to-MOS equation is described in ITU-T G.107, ITU.

In some embodiments, one or more of the NaC APIs discussed previously allow reporting the QoE for an XR application.

The described APIs allow an XR application to report QoE metrics. The described NAC APIs can be called from NEF and NRF of a communication system (e.g., a core network of a communication system).

NRF (Network Repository Function): This is used to index all APIs that can access the network functions (NFs) of the core network of the communication system (e.g., the 5GC). The NRF provides information about each NF that is available in the core network. This information is used by network functions of the core network (e.g. SMF, AMF, PCF). NF management, discovery and authorisation is done through the NRF.

NEF (Network Exposure Function): This is available between 5G core network and 3GPP entities that require access to the 5GC, or to application functions. An application that requires access to internal data of the 5GC needs to go through the NEF. This is the case, for example, for a XR Application.

APIs may be used for service based interfaces. The APIs for some embodiments may define the NEF northbound APIs which are a set of APIs defining the related procedures and resources for the interaction between different core network elements. For example, as defined in TS 29.522 each new API has a resource, a method for getting the resource (e.g. HTTP methods), and what type of data models (data types) are defined for those resources.

Table 1 below shows an API List for the API of some embodiments. This API list may be used by other network functions of the 5GS and solutions (e.g. Network as Code)

| (1) | reportQoE(*score*, *time*) - report the application-level QoE ("score", in 1-5 scale) corresponding to the last "time" seconds. |
| --- | --- |
| (2) | requestKQIs(*resolution*, *fps*) - request enough QoS to support the split rendering process at a given resolution and frame rate. |
| (3) | reportFrame(*resolution*, *bytes, delay, timestamp*) - report the sending of an individual frame at a given timestamp, its resolution in pixels, the size in bytes, and the coding delay overhead added in the coding and packaging process for that frame. |
| (4) | reportMask(*resolution, bytes, delay, RTT, timestamp*) - report the reception of an individual segmentation mask at a given timestamp, its resolution in pixels, size in bytes, and the coding delay overhead added in the decoding and unpackaging process for that mask as well as the total (application-level) RTT spent (i.e., the time difference with the moment where the frame was reported via reportFrame() function |
| (5) | reportProces(*delay, timestamp*) - report the time used to end-to-end process a single frame and return its segmentation mask, including coding and decoding delays. |

The procedures are used by the NF to authorize the request and forward the request for Network Slice Instance Management via the NEF.

In order to request XR QoE for the XR application, the NF shall send an HTTP POST message to the NEF to the resource "XR Application Instance", the HTTP POST request message may include the XRApplicationtData structure that may include:

- an application identifier as "appId" attribute;
  and may include:
- an QoE as "QoEType" attribute;

The following describes the structure for the Resource URI and HTTP methods used by the "XRApplicationQoE" API.

{apiRoot}/xrapplicationqoe/v1

/{afId}

/QoE

/{appID}

The datatype XRApplicationtData is defined below

**Table 1 XR Application QoE Data**

| Atribute name | Data type | Cardinality | Description | Applicability |
|---|---|---|---|---|
| afAppId | string | 1 | Identifies an application. | |
| QoEType | integer | 0..1 | Identifies QoE Function (described in Table 1) to be used by the application:<br>1: reportQoE<br>2: requestKQIs<br>3: reportFrame<br>4: reportMask<br>5: reportProcess | |
| score | integer | 0..1 | "1-5" value which indicates a (QoE) qualitative result either for the | |
| | | | stream or application ('5' maximum experience <-- '1' minimum experience - ) | |
| time | dateti me | 0..1 | QoE Function request time | |
| resolution | integer | 0..1 | XR Video resolution in pixels | |
| fps | integer | 0..1 | Number of frames that appears within a second (Frames per Second) | |
| bytes | integer | 0..1 | Number of bytes processed by the QoE function | |
| delay | integer | 0..1 | Decoding delay in seconds | |
| RTT | integer | 0..1 | Duration (in milliseconds) from the moment the request was done and a response is sent | |
| timestamp | dateti me | 0..1 | Total time used for end-to-end process | |

The following table provides an overview of the resources and HTTP methods applicable for NSIManagement API.

| Resource name | Resource URI | HTTP method | Description |
|---|---|---|---|
| XR Application QoE | /{afId}/QoE | GET | Read all QoE functions available which can be used for an application |
| | | POST | Request a QoE for an XR Application |

The resource XR Application QoE allows an AF to request QoE for an application.

**Resource URI: {apiRoot}/xrapplicationqoe/v1/{afId}/qoe**

| Name | Data type | Definition |
|------|-----------|------------|
| aftd | string | Identifier of the AF. |

**Resource Method (GET)**

The GET method allows to read all active configurations for a given AF. The AF shall initiate the HTTP GET request message and the NEF shall respond to the message.

*GET Method*

| Name | Data type | Cardinality | Description |
|------|-----------|-------------|-------------|
| N/A | | | |

*GET Request Body*

| Data type | | Cardinality | Description |
|-----------|--|-------------|-------------|
| N/A | | | |

*GET Response Body*

| | Data type Cardinality | Response codes | Description |
|--|-----------------------|----------------|-------------|
| array(XRApplica-tionData) | 0..N | 200 OK | All the functions available for the AF in the request URI are returned. |
| N/A | | 422 Unprocessable Entity | Could not parse request body, during resource retrieval. |
| N/A | | 500 Generic Error Response | Unexpected condition that prevented it from fulfilling the request, during resource retrieval. |
| NOTE: The mandatory HTTP error status codes for the GET method listed in table 5.2.6-1 of 3GPP TS 29.122 also apply. | | | |

**Resource Method (POST)**

The POST method creates a new resource to individual XR Application QoE for a given AF. The AF shall initiate the HTTP POST request message and the NEF shall respond to the message. The NEF shall construct the URI of the created resource.

*POST Request Body*

| Data type | Cardinality | Description |
|-----------|-------------|-------------|
| NSIManageme ntData | 1 | Parameters to create an XR Application resource. |

*POST Response Body*

| Data type | Cardinality | Response codes | Description |
|---|---|---|---|
| XRApplicatio nDataData | 0..N | 201 OK | The configuration resource was created success-fully.<br>The URI of the created resource shall be returned in the "Location" HTTP header. |

QoE is an end-to-end measure between user and access network, of satisfaction of a user of a user equipment while QoS measures distinct parameters. For example, these parameters may relate to the network status. The QoS parameters can be viewed as the inherent attributes of the networks, which are important in guaranteeing QoE requirements of the users.

Quality of Experience (QoE) is the overall acceptability of an application or service, as perceived subjectively by the end-user.

QoE may include the complete end-to-end system effects (client, terminal, network, services infrastructure, etc) on a degree of delight or annoyance related to the use of an XR service experienced by an XR user of the XR service provided by an XR application..

The overall acceptability may be influenced by expectations of a user (user expectations) and context.

In some embodiments, QoE may be controlled by parameters that are reasonably expected to be under the control of the provider of the XR service (generally referred to as XR service provider).

QoE indicates performance metrics as expressed from the end service user's point of view (e.g., the XR user). They can be required or reported by the common users, and may be stated irrespective of their measurability.

QoE is used can be regarded as performance characteristics that have most relevance to end users of the service. QoE may be mapped to QoS of a data session (e.g., PDU session).

3GPP TR 26.944 relates to end-to-end multimedia services performance metrics such as QoE.

Some example QoE parameters are:

Service non-access
Service failure
Service setting-up time
Re-buffering
Image corruption
Edge noise
Blurriness
Colour reproduction accuracy
Blockiness
Incontinuous image with block
Freeze image
Audio quality
Audio/Video synchronization error

A given QoE level may be associated with particular values of one or more of these QoE parameters and/or any other suitable QoE parameter.

In the preceding discussions, reference has been made to various modules. A module may be implemented by suitable circuitry. A module may be implemented by at least one processor and at least one memory. The memory may comprise computer code which is stored in the at least one memory and executed by the at least one processor. In some embodiments, two or more modules may be provided by a common at least one processor and at least one memory. In some embodiments, one or more modules may be provided by a dedicated at least one processor and at least memory.

The previous examples have been based on a split rendering scenario where a frame is captured on the user side and semantic segmentation to provide a mask is carried out on the captured frame at an edge cloud computing system. The mask is applied to the captured frame on the user side.

However, it should be appreciated that other embodiments may be used where there is a split in the process of data so that some data processing is provided on the user side and some data processing in performed on a computing resource remote from the user. The computing resource remote from the user may be an edge cloud computing resource.

The data processing may be split in any suitable manner. Generally, more complex processing may be performed remote from the user.

In some embodiments, the user side may capture image data. The image data may be in the form of frame data. The frame data may be sent to the computing resource remote from the user. The computer resource may process that image data and send data back to the user side. In the example given, that processing is to provide a semantic mask to apply to the data. In other embodiments, different processing may be carried out. For example, the computing resource remote from the user may send back modified frame data. In some embodiments, the user side may be configured to use the received data. For example, the received data may be used to control an image which is displayed to the user. The user side may use the received data to process the image data to control the image which is displayed to the user. In other example, the modified frame data may be used to control the image which is displayed to the user.

Some embodiments may be applied in any distributed computing system involving images (Iv) and/or delay-critical information (Id). Some embodiments may be used where there is heavy network usage. This may be, for example, in terms of high data rate and/or low latency required. Embodiments may be applied where there is a need to provide an optimization or improvement at the 5QI level.

Some embodiments may be provided in the context of XR without image data. For example, generating time critical information in an AI server may be required. For example, animating an artificial avatar which is included in the XR experience may be time critical, For a fluid interaction or experience by the user, the delay should be low.

Some embodiments may be used where generating haptic information to feed a haptic device in the UE is required. Haptics may require a low latency to provide a good QoE.

Some embodiments may be used in non-XR use cases, For example, some embodiments may be used in in the tele-operation of devices. The devices may be vehicles, machinery, and/or the like.

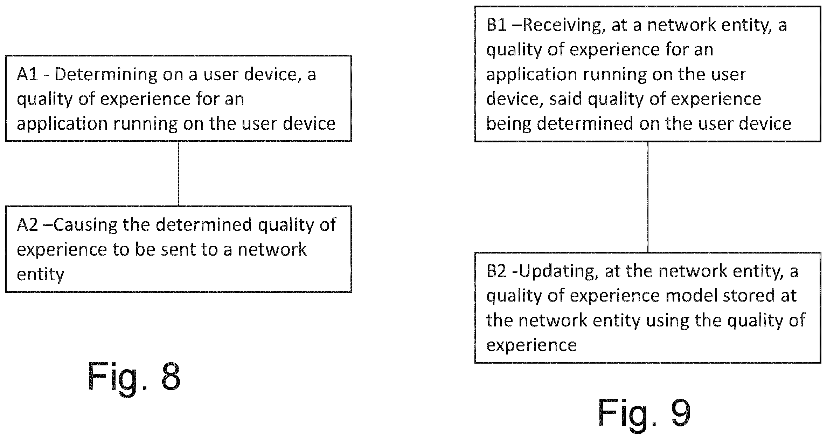

Reference is made to Figure 8 which shows a method of some embodiments.

This method may be performed by an apparatus. The apparatus may be in or be a user device or UE.

The apparatus may comprise suitable means, such as circuitry for providing the method.

Alternatively or additionally, the apparatus may comprise at least one processor and at least one memory storing instructions that, when executed by the at least one processor cause the apparatus at least to provide the method below.

Alternatively or additionally, the apparatus may be such as discussed in relation to Figure 3.

The method may be provided by computer program code or computer executable instructions.

The method may comprise as referenced A1, determining on a user device, a quality of experience for an application running on the user device

The method may comprise as referenced A2, causing the determined quality of experience to be sent to a network entity.

It should be appreciated that the method outlined in Figure 8 may be modified to include any of the previously described features.

Reference is made to Figure 9 which shows a method of some embodiments.

This method may be performed by an apparatus. The apparatus may be in or be a network entity or server.

The apparatus may comprise suitable means, such as circuitry for providing the method.

Alternatively or additionally, the apparatus may comprise at least one processor and at least one memory storing instructions that, when executed by the at least one processor cause the apparatus at least to provide the method below.

Alternatively or additionally, the apparatus may be such as discussed in relation to Figure 2.

The method may be provided by computer program code or computer executable instructions.

The method may comprise as referenced B1, receiving at a network entity, a quality of experience for an application running on the user device, said quality of experience being determined on the user device.

The method may comprise as referenced B2, updating, at the network entity, a quality of experience model stored at the network entity using the quality of experience..

It should be appreciated that the method outlined in Figure 9 may be modified to include any of the previously described features.

Computer program code may be downloaded and stored in one or more memories of the relevant apparatus or device.

Therefore, although certain embodiments were described above by way of example with reference to certain example architectures for wireless networks, technologies and standards, embodiments may be applied to any other suitable forms of communication systems than those illustrated and described herein. In this example, some embodiments have been described in relation to a 5G network.

It is also noted herein that while the above describes example embodiments, there are several variations and modifications which may be made to the disclosed solution without departing from the scope of the present invention. As used herein, "at least one of the following: <a list of two or more elements>" and "at least one of <a list of two or more elements>" and similar wording, where the list of two or more elements are joined by "and" or "or", mean at least any one of the elements, or at least any two or more of the elements, or at least all the elements. In general, the various embodiments may be implemented in hardware or special purpose circuitry, software, logic or any combination thereof. Some aspects of the disclosure may be implemented in hardware, while other aspects may be implemented in firmware or software which may be executed by a controller, microprocessor or other computing device, although the disclosure is not limited thereto. While various aspects of the disclosure may be illustrated and described as block diagrams, flow charts, or using some other pictorial representation, it is well understood that these blocks, apparatus, systems, techniques or methods described herein may be implemented in, as non-limiting examples, hardware, software, firmware, special purpose circuits or logic, general purpose hardware or controller or other computing devices, or some combination thereof.

As used in this application, the term "circuitry" may refer to one or more or all of the following:

(a) hardware-only circuit implementations (such as implementations in only analog and/or digital circuitry) and
(b) combinations of hardware circuits and software, such as (as applicable):

(i) a combination of analog and/or digital hardware circuit(s) with software/firmware and
(ii) any portions of hardware processor(s) with software (including digital signal processor(s)), software, and memory(ies) that work together to cause an apparatus, such as a mobile phone or server, to perform various functions) and

(c) hardware circuit(s) and or processor(s), such as a microprocessor(s) or a portion of a microprocessor(s), that requires software (e.g., firmware) for operation, but the software may not be present when it is not needed for operation."

This definition of circuitry applies to all uses of this term in this application, including in any claims. As a further example, as used in this application, the term circuitry also covers an implementation of merely a hardware circuit or processor (or multiple processors) or portion of a hardware circuit or processor and its (or their) accompanying software and/or firmware. The term circuitry also covers, for example and if applicable to the particular claim element, an integrated circuit such as a baseband integrated circuit or processor integrated circuit for a mobile device or a similar integrated circuit in server, a cellular network device, or other computing or network device.

The embodiments of this disclosure may be implemented by computer software executable by a data processor of the mobile device, such as in the processor entity, or by hardware, or by a combination of software and hardware. Computer software or program, also called program product, including software routines, applets and/or macros, may be stored in any apparatus-readable data storage medium and they comprise program instructions to perform particular tasks. A computer program product may comprise one or more computer-executable components which, when the program is run, are configured to carry out embodiments. The one or more computer-executable components may be at least one software code or portions of it.

Further in this regard it should be noted that any blocks of the logic flow as in the Figures may represent program steps, or interconnected logic circuits, blocks and functions, or a combination of program steps and logic circuits, blocks and functions. The software may be stored on such physical media as memory chips, or memory blocks implemented within the processor, magnetic media such as hard disk or floppy disks, and optical media such as for example DVD and the data variants thereof, CD. The physical media is a non-transitory media.

The term "non-transitory," as used herein, is a limitation of the medium itself (i.e., tangible, not a signal) as opposed to a limitation on data storage persistency (e.g., RAM vs. ROM).

The memory may be of any type suitable to the local technical environment and may be implemented using any suitable data storage technology, such as semiconductor-based memory devices, magnetic memory devices and systems, optical memory devices and systems, fixed memory and removable memory. The data processors may be of any type suitable to the local technical environment, and may comprise one or more of general-purpose computers, special purpose computers, microprocessors, digital signal processors (DSPs), application specific integrated circuits (ASIC), FPGA, gate level circuits and processors based on multi core processor architecture, as non-limiting examples.

Embodiments of the disclosure may be practiced in various components such as integrated circuit modules. The design of integrated circuits is by and large a highly automated process. Complex and powerful software tools are available for converting a logic level design into a semiconductor circuit design ready to be etched and formed on a semiconductor substrate.

The foregoing description has provided by way of non-limiting examples a full and informative description of the exemplary embodiments of this disclosure. However, various modifications and adaptations may become apparent to those skilled in the relevant arts in view of the foregoing description, when read in conjunction with the accompanying drawings and the appended claims. Indeed, there are further embodiments comprising a combination of one or more embodiments with any of the other embodiments previously discussed. The scope of protection sought for some embodiments of the disclosure is set out by the claims. The embodiments and features, if any, described in this specification that do not fall under the scope of the claims are to be interpreted as examples useful for understanding various embodiments of the disclosure. It should be noted that different claims with differing claim scope may be pursued in related applications such as divisional or continuation applications.

**Claims**

1. A method comprising:

   determining on a user device, a quality of experience for an application running on the user device using a quality of experience model stored on the user device; and
   causing the determined quality of experience to be sent to a network entity.

2. The method as claimed in claim 1, wherein the quality of experience model defines a relationship between the quality of experience and one or more of:
   one or more metrics; one or more measurements; or one or more key performance indicators.

3. The method as claimed in claim 2, comprising causing the determined quality of experience to be sent to the network entity with one or more values used to determine said quality of experience using said quality of experience model, the one or more values comprising one or more of: one or more metric values; one or more measurement values; or one or more performance indicator values.

4. The method as claimed in claims 2 or 3, wherein the quality of experience model comprises at least one deployment based parameter.

5. The method as claimed in claim 4, wherein at least one deployment based parameter comprises one or more parameters used to determine a transmission rating.

6. The method as claimed in any of claims 2 to 5, wherein the quality of experience model stored in the user device comprises at least one user specific based parameter.

7. The method as claimed in claim 5 and 6, wherein at least one user specific based parameter comprises one or more parameters used to provide a transformation from the transmission rating to a mean opinion score defining the quality of experience.

8. The method as claimed in claim 6 or 7, comprising updating one or more of the at least one user specific based parameters in the quality of experience model stored in the user device based on one or more of the one or more values.

9. The method as claimed in any of claims 2 to 8, wherein one or more performance indicators provide one or more of: an indication of a visual quality; a measure of a data rate; or an indicator of delay.

10. The method as claimed in any of claims 2 to 9, comprising causing a request to be sent from the user device, said request being for the quality of experience model, and receiving said quality of experience model in response to said request.

11. The method as claimed in any preceding claim, comprising causing first data from the application to be sent to a remote computing resource, and receiving second data from the remote computing resource.

12. The method as claimed in claim 11, wherein the first data comprises frame data and the second data comprises one or more segmentation masks, the method further comprising processing, by the application, the frame data and the one or more segmentation masks to provide image data for displaying on a display.

13. The method as claimed in any preceding claim, wherein the application comprises an extended reality application.

14. A user equipment comprising at least one processor and at least one memory storing instructions that, when executed by the at least one processor, cause the user equipment to perform the method of any one of claims 1 to 13.

15. A method comprising:

receiving, at a network entity, a quality of experience for an application running on the user device, said quality of experience being determined on the user device; and

updating, at the network entity, a quality of experience model stored at the network entity using the quality of experience.

Fig. 1

Fig. 2

Fig. 3

EP 4 478 680 A1

Fig. 4

Fig. 5

EP 4 478 680 A1

Fig. 6

AS
Module

| UE 500 | | MEC 520 | | QoE server 512 | 5GC |

KPI report Module — XR Application — AI Algorithm — KPI Report Module

5G Coe

T1 ReportFrame()

T2 FRAME

T3 REPORT FRAME

T4 MASK

T6 ReportProcess()

T5 ReportMask()

T7 REPORT PROCESS

T8 REPORT MASK

T9 ReportQoE()

T10 REPORT QoE

_T11 UpdateQoEModel()

Fig. 7

KQIS GRANTED

A1 - Determining on a user device, a quality of experience for an application running on the user device

A2 –Causing the determined quality of experience to be sent to a network entity

# Fig. 8

B1 –Receiving, at a network entity, a quality of experience for an application running on the user device, said quality of experience being determined on the user device

B2 -Updating, at the network entity, a quality of experience model stored at the network entity using the quality of experience

# Fig. 9

Europäisches
Patentamt

European
Patent Office

Office européen
des brevets

# EUROPEAN SEARCH REPORT

Application Number

EP 23 38 2602

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2023/282421 A1 (LG ELECTRONICS INC [KR]) 12 January 2023 (2023-01-12) <br> * paragraph [0008] * <br> * paragraph [0151] – paragraph [0157] * <br> * paragraph [0196] * <br> * figures 10, 11 * | 1-15 | INV. <br> H04L41/5019 <br> H04L67/131 <br> H04W24/02 <br> H04L41/5067 |
| X | WO 2022/083923 A1 (NOKIA TECHNOLOGIES OY [FI]) 28 April 2022 (2022-04-28) <br> * paragraph [0028] – paragraph [0030] * <br> * paragraph [0033] * <br> * paragraph [0043] – paragraph [0047] * <br> * paragraph [0056] – paragraph [0061] * <br> * figure 8B * | 1-3,14, 15 | ADD. <br> H04L41/5009 <br> H04L41/50 <br> H04L41/16 |
| A | AHMAD ARSLAN ET AL: "Towards QoE monitoring at user terminal: A monitoring approach based on quality degradation", 2017 IEEE INTERNATIONAL SYMPOSIUM ON BROADBAND MULTIMEDIA SYSTEMS AND BROADCASTING (BMSB), IEEE, 7 June 2017 (2017-06-07), pages 1-6, XP033126392, DOI: 10.1109/BMSB.2017.7986131 [retrieved on 2017-07-19] * the whole document * | 1-15 | |
| A | US 2022/286369 A1 (LEE TA-SUNG [TW] ET AL) 8 September 2022 (2022-09-08) <br> * paragraph [0005] – paragraph [0007] * <br> * paragraph [0017] * <br> * paragraph [0025] – paragraph [0030] * | 1-15 | TECHNICAL FIELDS SEARCHED (IPC) <br><br> H04L <br> H04W |

-/--

The present search report has been drawn up for all claims

| Place of search | Date of completion of the search | Examiner |
|---|---|---|
| Munich | 7 November 2023 | Ramenzoni, Stefano |

EPO FORM 1503 03.82 (P04C01)

Europäisches
Patentamt

European
Patent Office

Office européen
des brevets

# EUROPEAN SEARCH REPORT

Application Number

EP 23 38 2602

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | "3rd Generation Partnership Project; Technical Specification Group Services and System Aspects; QoE parameters and metrics relevant to the Virtual Reality (VR) user experience (Release 17)", 3GPP STANDARD; TECHNICAL REPORT; 3GPP TR 26.929, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. SA WG4, no. V17.0.0 7 April 2022 (2022-04-07), pages 1-37, XP052146235, Retrieved from the Internet: URL:https://ftp.3gpp.org/Specs/archive/26_ series/26.929/26929-h00.zip 26929-h00.doc [retrieved on 2022-04-07] * the whole document * | 1-15 | |

TECHNICAL FIELDS
SEARCHED      (IPC)

The present search report has been drawn up for all claims

| Place of search | Date of completion of the search | Examiner |
|---|---|---|
| Munich | 7 November 2023 | Ramenzoni, Stefano |

EPO FORM 1503 03.82 (P04C01)

## ANNEX TO THE EUROPEAN SEARCH REPORT
## ON EUROPEAN PATENT APPLICATION NO.

EP 23 38 2602

This annex lists the patent family members relating to the patent documents cited in the above-mentioned European search report.
The members are as contained in the European Patent Office EDP file on
The European Patent Office is in no way liable for these particulars which are merely given for the purpose of information.

07-11-2023

| Patent document cited in search report | Publication date | Patent family member(s) | Publication date |
|---|---|---|---|
| WO 2023282421 A1 | 12-01-2023 | NONE | |
| WO 2022083923 A1 | 28-04-2022 | EP 4233365 A1 | 30-08-2023 |
| | | WO 2022083923 A1 | 28-04-2022 |
| US 2022286369 A1 | 08-09-2022 | TW 202236880 A | 16-09-2022 |
| | | US 2022286369 A1 | 08-09-2022 |

EPO FORM P0459

For more details about this annex : see Official Journal of the European Patent Office, No. 12/82